# EUROPÄISCHE PATENTSCHRIFT

(11) **EP 0 806 546 B1**
(45) Veröffentlichungstag und Bekanntmachung des Hinweises auf die Patenterteilung: **23.10.2002**
(21) Anmeldenummer: 97810177.2
(22) Anmeldetag: 25.03.1997
(51) Int. Cl.: F01D 5/28

(54) **Thermisch belastete Strömungsmaschinenschaufel mit keramischem Vorderkanteneinsatz**
Thermally stressed turbomachine vane with a ceramic insert in the leading edge
Aube de turbomachine thermiquement chargé avec une pièce en céramique inserée dans le bord d'attaque

(30) Priorität: 02.05.1996 DE 19617556
(43) Veröffentlichungstag der Anmeldung: 12.11.1997
(73) Patentinhaber: Alstom, 75116 Paris (FR)
(72) Erfinder: Beeck, Alexander, Dr., 5304 Endingen (CH)
(74) Vertreter: Liebe, Rainer

(56) Entgegenhaltungen:
- EP-A- 0 473 536
- DE-A- 1 912 253
- DE-A- 3 821 005
- GB-A- 939 505
- GB-A- 1 030 829
- US-A- 3 215 511
- PATENT ABSTRACTS OF JAPAN vol. 009, no. 011 (M-351), 18.Januar 1985 & JP 59 160007 A (KOGYO GIJUTSUIN;OTHERS: 0J), 10.September 1984,

## Beschreibung

### Technisches Gebiet

Die vorliegende Erfindung betrifft eine thermisch belastete Schaufel für eine Strömungsmaschine gemäss dem Oberbegriff des Anspruch 1.

### Stand der Technik

Die Forderung nach hohen Wirkungsgraden in einer Turbine führt neben einem hohen Druckverhältnis zu immer höheren Turbineneintrittstemperaturen. Die heute verfügbaren Schaufelwerkstoffe für solche Turbinen ertragen diese Temperaturen jedoch nur bei entsprechend guter Kühlung. Die hierzu notwendige Kühlluft wird vom Verbrennungsluftstrom abgezweigt und nimmt demnach nicht an der Energiezufuhr in der Brennkammer teil, was zu einer Verringerung des Wirkungsgrades der Kraftwerksanlage fuhrt.

Um Kühlluft einzusparen, werden derzeit viele Versuche unternommen, die Turbinenschaufeln mit einem keramischen Ueberzug zu schützen, oder gar die ganze Schaufel aus einem keramischen Material herzustellen. Bei keramischer Beschichtung besteht allgemein die Gefahr eines Aufplatzens der Struktur, vor allem dann, wenn mit dickeren Schichten, 0,5-1,5 mm, gearbeitet werden muss. Werden demgegenüber dünnere keramische Schichten vorgesehen, so müssen diese durch einen Kühlluftfilm gekühlt werden, was der eigentlichen Aufgabe einer Wärmedämmschicht widerspricht. Grosse vollkeramische Schaufeln sind gegenwärtig noch nicht in der Lage, den auftretenden Kräften und Spannungen über eine genügend lange Betriebszeit standzuhalten.

GB 939,505, GB 1,030,829 und DE 38 21 005 offenbaren jeweils Schaufeln in Verbundbauweise. Die Schaufel selbst ist dabei jeweils aus metallischen Werkstoffen hergestellt, und auf den angeströmten Kopfteil der Schaufel ist eine keramische Vorderkante montiert. In der GB 939,505 wird vorgeschlagen, in einen Spalt zwischen dem Schaufelkorper und der Vorderkante Kühlluft einzublasen. Zur Befestigung schlagen die GB 1,030,829 und die DE 38 21 005 feste formschlüssige Verbindungen, beispielsweise in Form von Schwalbenschwänzen, vor. DE 38 21 005 schlägt weiterhin vor, die Vorderkante in radialer Richtung in mehrere Segmente zu unterteilen, eine Konstruktion, die sowohl die Herstellung der massivkeramischen Vorderkante erleichtert, andererseits die Fliehkraftbelastung der keramischen Vorderkante reduziert.

Bei den im Stand der Technik bekannten Ausführungen allerdings fuhren die stark unterschiedlichen thermischen Dehnungen von keramischer Vorderkante und Schaufelkorper aufgrund der starren Befestigung insbesondere in der Keramik zu zerstörerischen Eigenspannungen.

### Darstellung der Erfindung

Hier will die Erfindung Abhilfe schaffen. Der Erfindung, wie sie in den Ansprüchen gekennzeichnet ist, liegt die Aufgabe zugrunde, bei einer Schaufel der eingangs genannten Art Vorkehrungen vorzuschlagen, welche eine möglichst spannungsfreie Befestigung der keramischen an der Schaufel ermöglichen.

Erfindungsgemäss wird die keramische Vorderkante der Schaufeln durch elastische Mittel an der angeströmten Kopfstufe der Schaufel befestigt, welche elastischen Mittel eine kraft- und/oder formschlüssige Verbindung zwischen der Schaufel und der keramischen Vorderkante herstellen, die stabil genug ist, um den auftretenden Kraften standzuhalten, die Elastizität der Verbindung aber thermische Differenzdehnungen weitgehend spannungsfrei aufzunehmen in der Lage ist.

Zusammenfassend bietet die Realisation der Erfindung folgende vorteilhafte Eigenschaften:
a) Die Vorderkante jeder Turbinenschaufel ist von geringerer geometrischer Abmessung. Dementsprechend hat man mit kleinen Keramikbauteilen zu tun, die an sich, hinsichtlich der oben genannten keramischen Probleme, wenig problematisch sind;
b) die Kräfte der Schaufeln und auf die Schaufeln werden nach herkömmlicher Art vom Metallteil derselben aufgenommen; durch die flexible Befestigung wird das Keramikteil von kaum vorhersagbaren Spannungen aufgrund von Differenzdehnungen entlastet.
c) die Vorderkante der Schaufel kann keramikgerecht konstruiert werden, d.h. es werden grosszügige Rundungen, gleichmässige Wandstärken, günstige Temperaturgradienten, genügend grosse Anlageflache vorgesehen.

Die Wirkungen daraus sind eine beträchtliche Wirkungsgradverbesserung, insbesondere bei den ersten Turbinenleitreihen, eine Verbesserung der Aerodynamik sowie eine beträchtliche Einsparung an Kühlluft, wobei gleichzeitig eine wesentlich höhere Betriebssicherheit der keramischen Vorderkante gewährleistet werden kann als nach dem Stand der Technik.

Vorteilhafte und zweckmässige Weiterbildungen der erfindungsgemässen Aufgabenlösung sind in den weiteren Ansprüchen gekennzeichnet.

### Kurze Beschreibung der Figuren

Die Erfindung wird nachfolgend anhand der Zeichnung näher erlautert. Es zeigt:
- Fig. 1: eine Turbinenschaufel mit einer Keramikvorderkante,
- Fig. 2: die Keramikvorderkantenpartie der Turbinenschaufel, gemäss Fig. 1,
- Fig. 3: eine dreidimensionale Ansicht einer Keramikvorderkante,
- Fig. 4: eine Ansicht der Trennflächen innerhalb der Keramikvorderkante,
- Fig. 5: eine Befestigung der Keramikvorderkante und
- Fig. 6: eine weitere Befestigung der Keramikvorderkante.

Alle für das unmittelbare Verstandnis der Erfindung nicht erforderlichen Elemente sind weggelassen worden. Gleiche Elemente sind in den verschiedene Figuren mit den gleichen Bezugszeichen versehen.

### Wege zur Ausführung der Erfindung, gewerbliche Verwendbarkeit

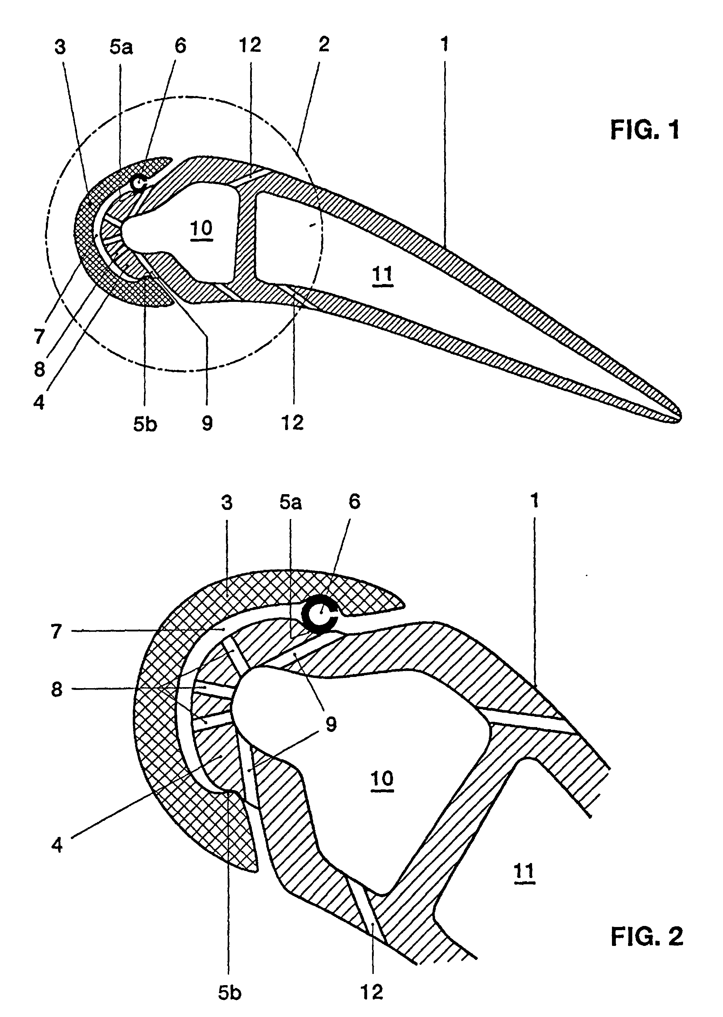

Fig. 1 zeigt eine Turbinenschaufel 1, wie sie üblicherweise in Gasturbinen zum Einsatz kommt. Diese weist inwendig verhältnismässig grosse Kühlkanäle auf, durch welche ein Kühlmedium strömt. Ersichtlich sind ein erster Kühlluftkanal 10 für die Vorderkantenpartie 2, und ein weiterer Kühlluftkanal 11 für die hintere Partie der Schaufel 1. Die Vorderkantenpartie 2 dieser aus einem hochwertigen Metall bestehenden Schaufel 1 wird eingezogen, um Platz für die Applizierung einer aus einem hochwertigem Keramikmaterial bestehenden schalenförmigen Vorderkante 3, im folgenden kurz Keramikvorderkante genannt, zu schaffen. Vorzugsweise sind Schaufel 1 und Keramikvorderkante 3 über Mittel miteinander verbunden, welche im gekoppelten Zustand einen Kraftschluss und/oder Formschluss zwischen den beiden zu erstellen vermögen. Zu diesem Zweck weist die Kopfstufe 4 der Schaufel 1 vorliegend sowohl saug- als auch druckseitig je eine Einkerbung 5a, 5b auf, welche die mechanische Verhängung der Keramikvorderkante 3 an der metallischen Kopfstufe 4 der Schaufel 1 ermöglicht. Der zur Verankerung benötigte Kraftschluss wird auf der einen Seite, beispielsweise bei der Einkerbung 5a, mit mindestens einem Federelement 6 erstellt, wobei dieses vorzugsweise von zylindrischer Ausgestaltung ist. Die Keramikvorderkante 3 wird zunächst entlang der Einkerbungen 5a, 5b eingehängt, und dann mit dem radialen Einschieben des Federelementes 6 verankert. Die Keramikvorderkante 3 liegt somit an zwei Linien auf, und kann sich thermisch innerhalb eines bestimmten Freiheitsgrades frei gegen das Federelement 6 bewegen. Ein Spalt 7 zwischen Kopfstufe 4 und Innenseite der Keramikvorderkante 3 dient als Isolierung, da hier ein Luftpolster vorliegt, das zusätzlich durch die Leckage an der genannten Linienführung gekühlt wird. Der Spalt 7 wird durch eine Art "Showerheadkühlung" (= Kühlung durch mehrere Lochreihen) versorgt, wobei der Luftdurchsatz durch die linienförmige Auflagefläche auf eine sehr geringe Menge begrenzt ist. Grundsätzlich ist die Kopfstufe 4 der Schaufel 1 so ausgebildet, dass eine, wenn auch nicht optimale, so doch ausreichende Aerodynamik gewährleistet ist. Des weiteren wird diese Kopfstufe 4 über eine Anzahl Kühlluftbohrungen 8 so gekühlt, dass ein Betrieb ohne Keramikvorderkante 3 über eine begrenzte Zeitspanne ohne weiteres möglich ist. Die Keramikvorderkante 3 weist eine Wandstärke von typischerweise 3-8 mm auf. Sowohl die Vorderkantenpartie 2 als auch der übrige Teil der Schaufel 1 sind mit Kühlluftbohrungen 12 versehen, welche von den Kühlluftkanälen 10 und 11 gespeist werden und welche eine Filmkühlung auf der Schaufeloberfläche bewirken. Danebst sind im abgewandten Bereich der Kopfstufe 4 weitere Kühlluftbohrungen 9 angebracht, welche einen Kühlfilm zwischen Metallund Keramikpartie der Schaufel 1 auslösen, womit auch diese heikle Partie hinsichtlich der dort wirkenden Kopplung zwischen den beiden Teilen optimal gekühlt wird. Neben herkömmlicher Keramik ist auch der Einsatz einer fortschrittlichen faserverstärkten Keramik möglich, welche gegen schädliche Einwirkungen, insbesondere mechanischer Natur, weit besser gefeit ist. Die schalenförmige Konfiguration der Keramikvorderkante 3 kommt der Ausbildung mit einer faserverstärkten Keramik entgegen. Zum besseren Verständnis wird die Vorderkantenpartie 2 der Schaufel 1 in Fig. 2 nochmals im grösseren Massstab aufgegriffen, und, soweit notwendig, weitergehend beschrieben.

Fig. 2 zeigt die Vorderkantenpartie 2 der Schaufel 1, wie sie unter Fig. 1 bereits weitgehend beschrieben worden ist. Aus dieser Figur geht der Aufbau der eingehängten Keramikvorderkante 3 sowie die dazu vorgesehenen Mittel 6 resp. 5a, 5b zur Erzeugung der Kopplung und eines Kraftschlusses und/oder Formschlusses zwischen den beiden Teilen 3/4 deutlich hervor.

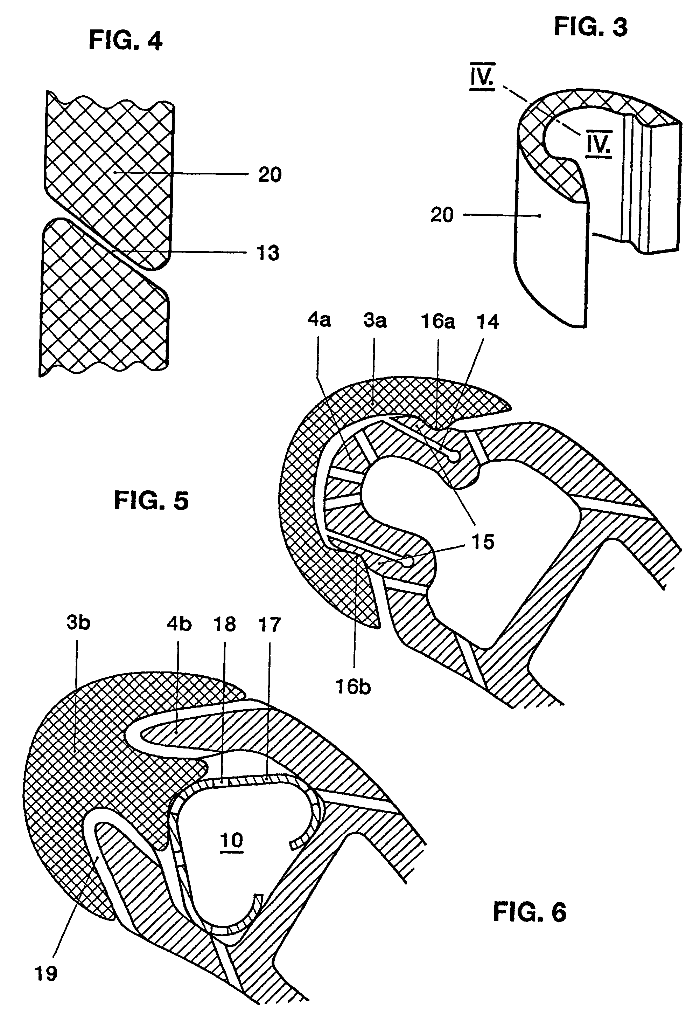

Fig. 3 zeigt in dreidimensionaler Ansicht die bereits unter Fig. 1 und 2 beschriebene Keramikvorderkante, welche hier wegen ihrer speziellen Ausbildung die Pos. 20 trägt. Falls die innerhalb dieser Keramikvorderkante 20 auftretenden radialen Spannungen im eingebauten Zustand zu gross werden sollten, kann hiergegen Abhilfe geschaffen werden, indem die Keramikvorderkante 20 in radialer Richtung zwei- oder dreigeteilt wird, wobei dann beim Einhängemechanismus für die verschiedenen Teile besondere Vorkehrungen vorgesehen werden müssen.

Aus Fig. 4 geht die Teilung einer solchen Keramikvorderkante 20 hervor. Die Trennfugen 13 hierzu verlaufen schräg, zum einen um die Dichtlänge zu vergrössern, und zum anderen um einen direkten Durchfluss der Heissgase durch die Trennfugen 13 innerhalb der Keramikvorderkante 20 auf die darunter angeordnete Kopfstufe der Schaufel zu verhindern. Die Trennfugen können auch senkrecht verlaufen um die Fertigung zu vereinfachen. Prinzipiell kann die Trennfuge beliebig gestaltet werden.

Fig. 5 zeigt eine weitere Variante der Einhängung der Keramikvorderkante 3a. Die Kopfstufe 4a entspricht hier weitgehend derjenigen aus Fig. 2. Was die Einhängung der Keramikvorderkante 3a betrifft, so weist diese Kopfstufe 4a beidseitig verhältnismässig grosse Einkerbung 16a, 16b auf. Im Bereich dieser Einkerbungen werden Schlitze 14 beidseitig der Kopfstufe 4a beispielsweise erodiert, womit federungsfähige Zungen 15, kurz Federzungen genannt, entstehen, welche den Kraftschluss zwischen den beiden zu verbindenden Teilen erstellen. Da hier eine verhältnismässige starke Federwirkung vorgesehen werden muss, um unterschiedliche thermische Dehnungen auszugleichen, ist die Einbaurichtung der Keramikvorderkante 3a radial vorzusehen, da der hier zur Verfügung stehende Federweg nicht ausreicht, um die Keramikvorderkante 3a von vorne über die Federzungen 15 zu schieben. Um die angestrebte Federwirkung zu erbringen, ist allerdings nur ein sehr kleiner Federweg vonnöten, zumal dieser auf zwei Seiten aufgeteilt ist.

Fig. 6 zeigt eine massive mit einer schwalbenschwanzförmigen Wurzel versehene Keramikvorderkante 3b, die ebenfalls radial eingebaut wird. Die Kopfstufe 4b dieser Schaufel hat hierzu eine offene eingeschnittene Vorderkante, deren Profil demjenigen einer schwalbenschwanzförmigen Wurzel entspricht. Selbsverständlich sind andere Profilierungen hierzu auch möglich. Die Keramikvorderkante 3b wird über deren Wurzel gegen die Kopfstufe 4b anhand eines federnden Metalleinsatzes 17 angepresst, welcher im vorderer Kühlkanal 10 eingelassen ist. Die durch diesen Kanal 10 strömende Kühlluft wird anhand entsprechender Oeffnungen 18 durch den Metalleinsatz 17 geleitet und strömt schliesslich entlang von in der Kopfstufe 4b eingegossenen Nuten 19, welche an die innere Form der Keramikvorderkante 3b anschliessen, weiter, wodurch eine genügend grosse Kühlfläche des Keramikteils am Metallteil gewährleistet ist. Der federnde Metalleinsatz 17 ist so konzipiert, dass er sich bei fehlender Keramikvorderkante 3b über die durch die Kopfstufe 4b gebildete Oeffnung legt, dergestalt, dass eine ausreichende Aerodynamik in diesem Bereich gewährleistet ist. Ebenfalls gewährleistet ist die Kühlung der Kopfstufe 4b, welche über die genannten Oeffnungen 18 vonstatten geht.

Bei allen vorgeschlagenen Lösungen hilft auch die Druckdifferenz der Kühlluft gegenüber dem hier strömenden Heissgas die jeweilige Keramikvorderkante definiert anzupressen. Die Lösungen weisen auch eine keramikgerechte Konfiguration auf, da einerseits durch die vorliegenden Temperaturgradienten im stationären Zustand weitgehend nur Druckspannungen auf die Keramikvorderkante vorliegen. Bei den Lösungen, die sich einer durch Federn erzeugten Spannung bedienen, muss darauf geachtet werden, dass in den transienten Lastbereichen die minimale hierzu benötigte Federkraft nicht verlorengeht, und dass keine schädigenden zugspannungen auf die Keramikmaterialien entstehen. vorzugsweise wird die Federung immer dort vorgesehen, wo eine genügende Kühlung der Federelemente gewährleistet ist. Grundsätzlich sind ähnliche Lösungen durch Anbringung von keramischen Teilen auch für die Hinterkanten der Schaufel möglich, die ebenfalls thermisch hochbelastet sind.

### Bezugszeichenliste

- 1: Schaufel
- 2: Vorderkantenpartie
- 3: Keramikvorderkante
- 3a: Keramikvorderkante
- 3b: Keramikvorderkante
- 4: Kopfstufe
- 4a: Kopfstufe
- 4b: Kopfstufe
- 5a: Einkerbung
- 5b: Einkerbung
- 6: Federelement
- 7: Spalt, Luftspalt
- 8: Kühlluftbohrungen
- 9: Kühlluftbohrungen
- 10: vorderer Kühlluftkanal
- 11: Hinterer Kühlluftkanal
- 12: Kühllluftbohrungen
- 13: Trennfuge
- 14: Schlitze
- 15: Federzungen
- 16: Anlageflächen
- 17: Federnder Metalleinsatz
- 18: Kühlluftöffnungen
- 19: Kühlluftnuten
- 20: Geteilte Keramikvorderkante

## Patentansprüche

1. Thermisch belastete Schaufel für eine Strömungsmaschine, bei welcher Schaufel eine angeströmte Kopfstufe (4, 4a, 4b) wenigstens teilweise von einer keramischen Vorderkante (3, 3a, 3b) abgedeckt ist, **dadurch gekennzeichnet, dass** in Wirkverbindung mit der Kopfstufe und der keramischen Vorderkante elastische Mittel (5b, 16, 6, 15, 17) angeordnet sind, welche elastischen Mittel einen Kraftschluss und/oder Formschluss zwischen der Kopfstufe und der keramischen Vorderkante herstellen, dergestalt, dass die elastischen Mittel eine hinreichend stabile Verbindung gewährleisten, um den auftretenden Kräften und Spannungen standzuhalten, und wobei die Elastizität der Verbindung thermische Differenzdehnungen zwischen der Schaufel und der keramischen Vorderkante weitgehend spannungsfrei aufzunehmen in der Lage ist.

2. Schaufel nach Anspruch 1, **dadurch gekennzeichnet, dass** die keramische Vorderkante (3, 3a) schalenform aufweist.

3. Schaufel nach Anspruch 1, **dadurch gekennzeichnet, dass** die keramische Vorderkante (3b) eine Formschluss bildende schwalbenschwanzförmige Wurzel aufweist.

4. Schaufel nach Anspruch 3, **dadurch gekennzeichnet, dass** die elastischen Mittel einen in die Kopfstufe eingesetzten elastischen Metalleinsatz (17) beinhalten, welcher elastische Metalleinsatz in Wirkverbindung mit der schwalbenschwanzförmigen Wurzel eine Verbindung zwischen der Kopfstufe und der keramischen Vorderkante herstellt.

5. Schaufel nach Anspruch 1, **dadurch gekennzeichnet, dass** zwischen einer Unterfläche der keramischen Vorderkante (3, 3a) und einer Stirnseite der Kopfstufe (4, 4a) ein Luftspalt (7) vorhanden ist, und dass dieser Luftspalt durch Kühlluft aus einem Kühlluftkanal (10) der Schaufel (1) durchströmbar ist.

6. Schaufel nach Anspruch 1, **dadurch gekennzeichnet, dass** die elastischen Mittel wenigstens ein Federelement (6, 15, 17) beinhalten.

7. Schaufel nach Anspruch 1, **dadurch gekennzeichnet, dass** die keramische Vorderkante (20) in radialer Richtung durch mindestens eine beliebig verlaufende Trennfuge (13) aufgeteilt ist.

8. Schaufel nach Anspruch 1, **dadurch gekennzeichnet, dass** die Kopfstufe (4, 4a) der Schaufel (1) allein oder mit einem federnden Element (17) eine aerodynamische Konfiguration aufweist.

9. Schaufel nach Anspruch 1, **dadurch gekennzeichnet, dass** die Kopfstufe (4, 4a) Mittel (8) zur Zufuhr von Kühlluft zwischen die Kopfstufe und die keramische Vorderkante aufweist.

10. Schaufel nach Anspruch 1, **dadurch gekennzeichnet, dass** die elastischen Mittel wenigstens eine Einkerbung (5a) und eine Federelement (6) einschliessen.

11. Schaufel nach Anspruch 1, **dadurch gekennzeichnet, dass** die elastischen Mittel in der Kopfstufe (4a) gebildete Federzungen (15) beinhalten, über welche Federzungen die keramische Vorderkante mit der Kopfstufe verbunden ist.

12. Schaufel nach Anspruch 6, **dadurch gekennzeichnet, dass** dass ein Federelement (17) in einer Aussparung der Kopfstufe (4b) angeordnet ist, wobei zwischen dem Federlement und der Kopfstufe ein Kühlkanal (10) gebildet ist, und das Federelement (17) Mittel (18) zur Zufuhr von Kühlluft aus dem Kühlkanal in einen Zwischenraum (19) zwischen der keramischen Vorderkante (3b) und der Kopfstufe (4b) aufweist.

## Claims

1. Thermally loaded blade for a fluid-flow machine, in which blade the head step (4, 4a, 4b) subjected to flow is at least partly covered by a ceramic leading edge (3, 3a, 3b), **characterized in that** elastic means (5b, 16, 6, 15, 17) are arranged in interaction with the head step and the ceramic leading edge, which elastic means produce a friction grip and/or a form grip between the head step and the ceramic leading edge in such a way that the elastic means ensure a sufficiently stable connection in order to withstand the forces and stresses which occur, the elasticity of the connection being able to absorb thermal differential expansions between the blade and the ceramic leading edge in a largely stress-free manner.

2. Blade according to Claim 1, **characterized in that** the ceramic leading edge (3, 3a) has a shell shape.

3. Blade according to Claim 1, **characterized in that** the ceramic leading edge (3b) has a dovetailed root forming a form grip.

4. Blade according to Claim 3, **characterized in that** the elastic means comprise an elastic metal insert (17) which is inserted into the head step and which, in interaction with the dovetailed root, produces a connection between the head step and the ceramic leading edge.

5. Blade according to Claim 1, **characterized in that** there is an air gap (7) between an undersurface of the ceramic leading edge (3, 3a) and an end face of the head step (4, 4a), and **in that** cooling air from a cooling-air passage (10) of the blade (1) can flow through this air gap.

6. Blade according to Claim 1, **characterized in that** the elastic means comprise at least one spring element (6, 15, 17).

7. Blade according to Claim 1, **characterized in that** the ceramic leading edge (20) is divided in the radial direction by at least one parting seam (13) running in any desired manner.

8. Blade according to Claim 1, **characterized in that** the head step (4, 4a) of the blade (1), on its own or with a resilient element (17), has an aerodynamic configuration.

9. Blade according to Claim 1, **characterized in that** the head step (4, 4a) has means (8) for feeding cooling air between the head step and the ceramic leading edge.

10. Blade according to Claim 1, **characterized in that** the elastic means include at least one notch (5a) and a spring element (6).

11. Blade according to Claim 1, **characterized in that** the elastic means comprise spring tongues (15) formed in the head step (4a), via which spring tongues the ceramic leading edge is connected to the head step.

12. Blade according to Claim 6, **characterized in that** a spring element (17) is arranged in a recess of the head step (4b), a cooling passage (10) being formed between the spring element and the head step, and the spring element (17) having means (18) for feeding cooling air from the cooling passage into an intermediate space (19) between the ceramic leading edge (3b) and the head step (4b).

## Revendications

1. Pale sollicitée thermiquement pour une machine d'écoulement, sur laquelle un étage de tête (4, 4a, 4b) balayé par l'écoulement est recouvert au moins partiellement par un bord d'attaque en céramique (3, 3a, 3b), **caractérisée en ce que** des moyens élastiques (5b, 16, 6, 15, 17) sont disposés en liaison d'action avec l'étage de tête et le bord d'attaque en céramique, lesquels moyens élastiques établissent entre l'étage de tête et le bord d'attaque en céramique une liaison en correspondance mécanique et/ou en correspondance géométrique, de telle sorte que les moyens élastiques assurent une liaison suffisamment stable pour résister aux forces et contraintes exercées, l'élasticité de la liaison étant en mesure de reprendre largement sans contrainte les allongements thermiques différentiels entre la pale et le bord d'attaque en céramique.

2. Pale selon la revendication 1, **caractérisée en ce que** le bord d'attaque en céramique (3, 3a) présente la forme d'une coquille.

3. Pale selon la revendication 1, **caractérisée en ce que** le bord avant en céramique (3b) présente une racine en forme de queue d'aronde qui forme une liaison en correspondance géométrique.

4. Pale selon la revendication 3, **caractérisée en ce que** les moyens élastiques contiennent une garniture élastique en métal (17) insérée dans l'étage de tête, laquelle garniture élastique en métal établit en liaison d'action avec la racine en forme de queue d'aronde une liaison entre l'étage de tête et le bord d'attaque en céramique;

5. Pale selon la revendication 1, **caractérisée en ce qu'**entre une surface inférieure du bord d'attaque en céramique (3, 3a) et un côté frontal de l'étage de tête (4, 4a) est présent un interstice d'air (7), et **en ce que** cet interstice d'air peut être balayé par de l'air de refroidissement provenant d'un canal d'air de refroidissement (10) de la pale (1).

6. Pale selon la revendication 1, **caractérisée en ce que** les moyens élastiques contiennent au moins un élément de ressort (6, 15, 17).

7. Pale selon la revendication 1, **caractérisée en ce que** le bord d'attaque en céramique (20) est divisé dans la direction radiale par au moins un joint de séparation (13) qui s'étend de manière quelconque.

8. Pale selon la revendication 1, **caractérisée en ce que** l'étage de tête (4, 4a) de la pale (1) présente, seul ou avec un élément élastique (17), une configuration aérodynamique.

9. Pale selon la revendication 1, **caractérisée en ce que** l'étage de tête (4, 4a) présente des moyens (8) pour l'apport d'air de refroidissement entre l'étage de tête et le bord d'attaque en céramique.

10. Pale selon la revendication 1, **caractérisée en ce que** les moyens élastiques enferment au moins une entaille (5a) et un élément élastique (6).

11. Pale selon la revendication 1, **caractérisée en ce que** les moyens élastiques contiennent des languettes élastiques (15) formées dans l'étage de tête (4a), le bord d'attaque en céramique étant relié à l'étage de tête par l'intermédiaire de ces languettes élastiques.

12. Pale selon la revendication 6, **caractérisée en ce qu'**un élément de ressort (17) est disposé dans un évidement de l'étage de tête (4b), un canal de refroidissement (10) étant formé entre l'élément de ressort et l'étage de tête, et l'élément de ressort (17) présente des moyens (18) pour l'apport d'air de refroidissement provenant du canal de refroidissement jusque dans un espace intermédiaire (19) situé entre le bord d'attaque en céramique (3b) et l'étage de tête (4b).
